# EUROPEAN PATENT SPECIFICATION

(11) **EP 2 437 502 B1**
(45) Date of publication and mention of the grant of the patent: **28.01.2015**
(21) Application number: 11160266.0
(22) Date of filing: 29.03.2011
(51) Int. Cl.: G09G 3/00, H04N 13/04, G09G 3/34, G06F 3/14

(54) **Display apparatus and control method thereof, shutter glasses and control method thereof, and display system**
Anzeigevorrichtung und Steuerverfahren dafür, Blendengläser und Steuerverfahren dafür und Anzeigesystem
Appareil d'affichage et son procédé de commande, verres d'obturateur et leur procédé de commande, et système d'affichage

(30) Priority: 29.09.2010 KR 20100094202
(43) Date of publication of application: 04.04.2012
(73) Proprietor: Samsung Electronics Co., Ltd., Suwon-si, Gyeonggi-do, 443-742 (KR)
(72) Inventor: Shim, Seung-seop, Anyang-si (KR); Kim, Deok-nam, Suwon-si (KR); Han, Hyung-seok, Yongin-si (KR); Shim, Sang-u, Hwaseong-si (KR); Bang, Jae-eun, Suwon-si (KR); Kim, Hwan-jin, Seoul (KR); Kim, Yun-seoph, Incheon (KR)
(74) Representative: Waddington, Richard

(56) References cited:
- EP-A2- 2 056 155
- US-A1- 2001 028 413
- US-A1- 2004 095 402
- US-A1- 2009 002 265

## Description

### BACKGROUND

### 1. Field

Apparatuses and methods consistent with exemplary embodiments relate to a display apparatus to display a three-dimensional (3D) image and a control method thereof, shutter glasses to perform selective transmission of light with respect to the eyes of user corresponding to the 3D image, and a method of controlling the same, and a display system having the display apparatus and the shutter glasses, and more particularly, to a display apparatus which has a data transmission structure between the display apparatus and the shutter glasses, and a method of controlling the same, shutter glasses, a method of controlling the same, and a display system.

### 2. Description of the Related Art

In a related art display system, a display apparatus processes an image signal input from an external image source and displays as an image on a display panel configured as a liquid crystal display (LCD). The display apparatus scans scan lines including image information on the panel to display an image on the panel. Accordingly, the scanned scan lines are sequentially arranged on the panel to constitute one image frame.

An image displayed by the display apparatus is classified into a two-dimensional (2D) image and a 3D image. The eyes of a user have different viewing angles, and thus the user perceives a 3D representation of an object. Accordingly, a 3D image is displayed on the display apparatus, being divided into a left image and a right image, and the display system includes 3D glasses which perform selective light transmission with respect to the eyes of the user accordingly. The 3D glasses are configured as shutter glasses to selectively transmit light based on whether voltage is applied, or polarizing glasses to transmit light in a preset polarized direction.

When the 3D glasses are configured as shutter glasses, the display apparatus generates and transmits a synchronization signal corresponding to the 3D image to the shutter glasses, and the shutter glasses operate based on the synchronization signal received from the display apparatus to selectively perform image transmission with respect to the eyes of the user.

US2001/0028413 discloses shutter glasses that detect a display synchronization sequence.

### SUMMARY

One or more exemplary embodiments provide a display apparatus, and a method of controlling the same. It is noted that these "exemplary embodiments" correspond to examples of the invention as filed. They do not necessarily correspond to embodiments as claimed in the patent granted.

According to the present invention there is provided a system and a method as set forth in the appended claims 1 and 3. Other features of the invention will be apparent from the dependent claims 2-3 and 5-6.

According to an aspect of an exemplary embodiment, there is provided a display apparatus including: a display panel; a light source unit which generates light that is provided to the display panel to display an image on the display panel; and a controller which controls turning on and off of the light source unit based on a pattern corresponding to first information during a non-display period during which an image frame is not displayed on the display panel so that an external device configured to detect light from the light source unit extracts the first information corresponding to a turning on and off pattern of the light source unit.

The external device may include shutter glasses, and the first information may include synchronization information to operate the shutter glasses corresponding to a three-dimensional image displayed on the display panel.

The synchronization information may include a first pattern corresponding to a left image frame and a second pattern corresponding to a right image frame, and the controller may alternately select the first pattern and the second pattern to control the light source unit corresponding to whether the left image frame or the right image frame is displayed.

According to an aspect of another exemplary embodiment, there is provided a display apparatus including: a lens which is operative to perform selective light transmission, a sensing unit which detects light emitted from the display apparatus, and a shutter controller which analyzes, from a result of the detection by the sensing unit, a turning on and off pattern of light corresponding to a non-display period during which an image frame is not displayed in the display apparatus, and controls an operation of the lens corresponding to first information extracted from the analyzed turning on and off pattern of the light.

The first information may include synchronization information with respect to the image frame displayed in the display apparatus.

The synchronization information may include a first pattern corresponding to a left image frame and a second pattern corresponding to a right image frame, and the shutter controller may control the lens to selectively open one of a left lens and a right lens corresponding to whether the analyzed turning on and off pattern is the first pattern or the second pattern.

The sensing unit may detect light emitted through a display panel of the display apparatus.

The sensing unit may include a photo sensor.

According to an aspect of another exemplary embodiment, there is provided a method of a controlling a display apparatus including: providing light from a light source unit to a display panel and displaying an image frame on the display panel; and turning on and off the light source unit based on a pattern corresponding to first information during a non-display period during which the image frame is not displayed on the display panel so that an external device to detect light from the light source unit extracts the first information corresponding to a turning on and off pattern of the light source unit.

The external device may include shutter glasses, and the first information may include synchronization information to operate the shutter glasses corresponding to a three-dimensional image displayed on the display panel.

The synchronization information may include a first pattern corresponding to a left image frame and a second pattern corresponding to a right image frame, and the turning on and off the light source unit may include alternately selecting the first pattern and the second pattern to control the light source unit corresponding to whether the left image frame or the right image frame is displayed.

According to an aspect of another exemplary embodiment, there is provided a method of controlling shutter glasses including a lens operating to perform selective light transmission, the method including detecting light emitted from a display apparatus; analyzing, from a result of the detection, a turning on and off pattern of light corresponding to a non-display period during which an image frame is not displayed in the display apparatus, and extracting first information corresponding to the analyzed turning on and off pattern of the light; and operating the lens corresponding to the extracted first information.

The first information may include synchronization information with respect to the image frame displayed in the display apparatus.

The synchronization information may include a first pattern corresponding to a left image frame and a second pattern corresponding to a right image frame, and the operating the lens may include selectively opening one of a left lens and a right lens of a user corresponding to whether the analyzed turning on and off pattern of the light is the first pattern or the second pattern.

The detecting light emitted from the display apparatus may include detecting light emitted through a display panel of the display apparatus.

According to an aspect of another exemplary embodiment, there is provided a display system including a first display apparatus; and an external device which communicates with the first display apparatus, the first display apparatus including a first display panel; a first light source unit which generates and provides light to the first display panel so that an image is displayed; and a first light source driver which turns on and off the first light source unit based on a pattern corresponding to first information during a non-display period during which an image frame is not displayed on the first display panel, the external device including an external device sensing unit which detects light emitted from the light source unit of the display apparatus, and an external device controller which analyzes a turning on and off pattern of light detected by the external device sensing unit and extracts the first information from the analyzed turning on and off pattern of the light.

The external device may include shutter glasses.

The first information may include synchronization information to operate the shutter glasses corresponding to a three-dimensional image displayed on the first display panel.

The synchronization information may include a first pattern corresponding to a left image frame and a second pattern corresponding to a right image frame, and the first light source unit driver may alternately select the first pattern and the second pattern to control the first light source unit corresponding to whether the left image frame or the right image frame is displayed.

The shutter glasses may include a left lens and a right lens respectively corresponding to the eyes of a user, and the external device controller selectively opens one of the left lens and the right lens corresponding to whether the analyzed turning on and off pattern of the light is the first pattern or the second pattern.

The external device sensing unit may detect light emitted through the first display panel.

The external device may include a second display apparatus including a second display panel and a second light source to provide light to the second display panel, and the first display apparatus may include a display apparatus sensing unit to detect light emitted from the second light source; and a display apparatus controller configured to analyze a turning on and off pattern of light detected by the display apparatus sensing unit and to extract information based on the analyzed turning on and off pattern of the light.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 illustrates an example of a display system according to a first exemplary embodiment;
FIG. 2 is a block diagram of the display system of the exemplary embodiment illustrated in FIG. 1;
FIG. 3 illustrates an exemplary method of transmitting synchronization information by the exemplary display system of FIG. 2;
FIG. 4 is a flowchart illustrating an exemplary method of controlling a display apparatus in the exemplary display system of FIG. 2;
FIG. 5 is a flowchart illustrating an exemplary method of controlling shutter glasses in the exemplary display system of FIG. 2;
FIG. 6 illustrates a display system according to a second exemplary embodiment; and
FIG. 7 is an exemplary block diagram of the exemplary display system of FIG. 6.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

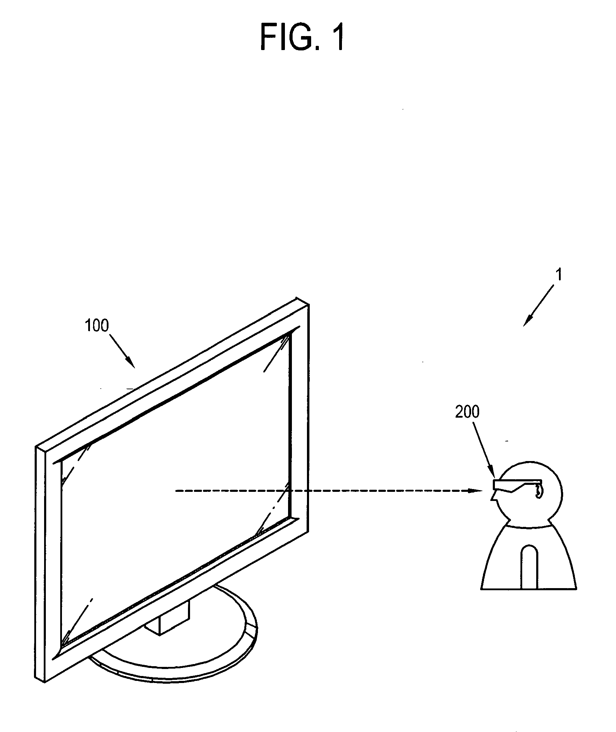

FIG. 1 illustrates an example of a display system 1 according to a first exemplary embodiment. The display system 1 includes a display apparatus 100 to process an image signal input from an outside and to display an image, and shutter glasses 200 to selectively transmit or block light L accordingly when the image displayed by the display apparatus 100 is a 3D image.

The display apparatus 100 receives an image signal from an external image source (not shown). The display apparatus 100 may receive an image signal from various image sources including, but not limited, a computer (not shown) including a central processing unit (CPU0 (not shown) and a graphic card (not shown) to generate and provide an image signal locally, a server (not shown) to provide an image signal via a network, and a transmitting device (not shown) of a broadcasting station to transmit a broadcasting signal using public or cable networks. Other equivalent structures as would be understood by those skilled in the art may be substituted therefore without departing from the scope of the invention.

The display apparatus 100 receives a 2D image signal corresponding to a 2D image or a 3D image signal corresponding to a 3D image from an outside and processes the signals to display an image. Here, unlike the 2D image, the 3D image includes a left image frame corresponding to a left eye of a user and a right image frame corresponding to a right eye of the user. When the 3D image signal is received, the display apparatus 100 alternately displays the left image frame and the right image frame based on the signal.

When the 3D image is displayed on the display apparatus 100, the shutter glasses 200 selectively open or close the view with respect to the left eye or the right eye of the user corresponding to whether either the left image frame or the right frame image is currently displayed. That is, when the left image frame is displayed on the display apparatus 100, the shutter glasses 200 open view for the left eye of the user and close view for the right eye. When the right image frame is displayed on the display apparatus 100, the shutter glasses 200 open the view for the right eye and close the view for the left eye.

For the 3D image displayed on the display apparatus 100 to correspond to a selective light transmission/light blocking operation of the shutter glasses 200, the shutter glasses 200 receive data corresponding to a display timing of an image frame from the display apparatus 100, and the shutter glasses 200 operate based on the received data.

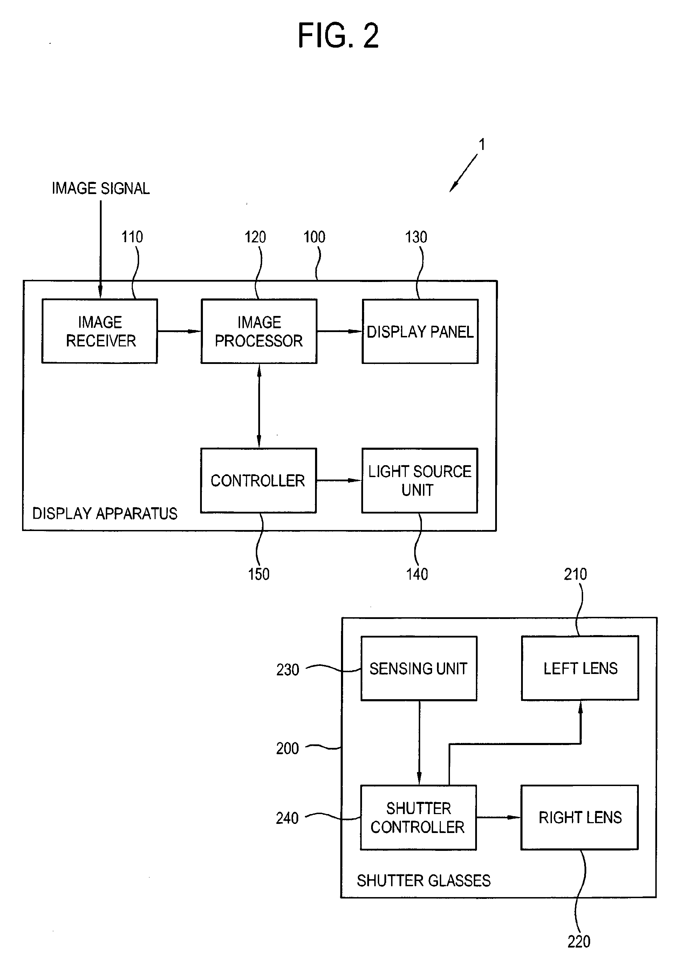

Hereinafter, a configuration of the exemplary display apparatus 100 and a configuration of the shutter glasses 200 are described with reference to FIG. 2. FIG. 2 is an exemplary block diagram illustrating a control relation between the display apparatus 100 and the shutter glasses 200 according to an exemplary embodiment.

The display apparatus 100 includes an image receiver 110 to receive an image signal from an outside, an image processor 120 to process an image signal received by the image receiver 110, a display panel 130 to display an image based on an image signal processed by the image processor 120, a light source unit 140 to generate and provide light to the display panel 130 so that an image is displayed on the display panel 130, and a controller 150 to control turning on and off of the light source unit 140.

The shutter glasses 200 includes a left lens 210 and a right lens 220 to respectively perform light transmission/light blocking with respect to left and right eyes of the user, a sensing unit 230 to detect light emitted from the light source unit 140 of the display apparatus 100, and a shutter controller 240 to selectively operate the left lens 210 and the right lens 220 based on a result of detection by the sensing unit 230.

In the exemplary embodiment with the above configuration, the display apparatus 100 controls turning on and off of the light source unit 140 based on a pattern (e.g., preset) corresponding to first information (e.g., predetermined) during a non-display period during which an image frame is not displayed on the display panel 130. The shutter glasses 200 detect and analyze a turning on and off pattern of light emitted from the display apparatus 100 to draw the first information.

The first information includes synchronization information to operate the shutter glasses 200 corresponding to a 3D image frame displayed on the display panel 130, and accordingly the shutter glasses 200 may operate corresponding to an image displayed by the display apparatus 100.

Hereinafter, the configuration of the display apparatus 100 is further described.

The image receiver 110 receives an image signal to transmit to the image processor 120 and may be configured in various types corresponding to a standard of the received image signal and a type of the display apparatus 100.

For example, when the display apparatus 100 is a television (TV), the image receiver 110 receives a radio frequency (RF) signal transmitted from a broadcasting station (not shown) or image signals in composite video, component video, super video, SCART (Syndicat francais des Constructeurs d'Appareils Radio et Television), and high definition multimedia interface (HDMI) standards through a cable. When an image signal is a broadcast signal, the image receiver 110 includes a tuner to tune the broadcast signal for each channel. Other equivalent configurations as would be known by one in the art may be substituted therefor without departing from the scope of the invention.

When the display apparatus 100 is a computer monitor, the image receiver 110 may be configured in a D-subminiature (D-SUB) standard to transmit red, green, and blue (RGB) signals based on a video graphics array (VGA) format, in digital video interface (DVI) standards including DVI-analog (DVI-A), DVI-integrated digital/analog (DVI-I), and DVI-digital (DVI-D), in a high-definition multimedia interface (HDMI) standard, or the like. Alternatively, the image receiver 110 may be configured as a DisplayPort, a unified display interface (UDI), or a wireless HD standard. Other equivalent configurations as would be known by one in the art may be substituted therefor without departing from the scope of the invention.

The image processor 120 performs various types of image processing (e.g., preset) on an image signal. The image processor 120 performs image processing to output the image signal to the display panel 130, so that an image is displayed on the display panel 130.

For example, but not by way of limitation, the image processor 120 may perform, but is not limited to, decoding and encoding corresponding to various image formats, de-interlacing, frame refresh rate conversion, scaling, noise reduction to improve image quality, detail enhancement, and the like. The image processor 120 may be provided as a separate component to independently conduct each process or an integrated component which is multifunctional.

When an image signal corresponding to a 3D image is transmitted from the image receiver 110, the image processor 120 alternately outputs an image signal corresponding to a left image frame and an image signal corresponding to a right image frame to the display panel 130. Accordingly, a display period during which an image frame is displayed, and a non-display period positioned between two chronologically successive display periods, are alternately generated on the display panel 130. In the following exemplary embodiments, a display period and a non-display are defined as disclosed above.

In the present exemplary embodiment, the display panel 130 may be configured as a liquid crystal display (LCD) but is not limited thereto; equivalent structures as would be understood by those skilled in the art may be substituted therefor, without departing from the scope of the invention. The display panel 130 displays an image signal processed by the image processor 120 as an image. The display panel 130 includes two substrates (not shown) and liquid crystals injected therebetween and displays an image frame by adjusting alignment of the liquid crystals by a driving signal corresponding to a result of processing an image signal by the image processor 120.

The display panel 130 does not emit light by itself and is provided with light from the light source unit 140 to display an image frame in a display region. The display region refers to a region during which an image frame is displayed on the display panel 130.

The light source unit 140 includes a light source (not shown) generating light on a board (not shown) to generate and emit light. The light source unit 140 may be modularized into a plurality of units to be disposed at rear or an edge of the display panel 130, but a position thereof is not limited.

The light source of the light source unit 140 may be, but is not limited to, a light emitting diode (LED). The LED may include blue, green, and red LEDs, and blue, green, and red light emitted from the respective colors of LEDs are mixed into white light having excellent color reproducibility. Alternatively, the LED may include a white LED which generates white light.

Although not shown in the present exemplary embodiment, components to adjust characteristics of light may be used in transmitting the light generated and emitted from the light source unit 140 to the display panel 130. For example, but not by way of limitation, the display apparatus 100 may include a backlight unit (not shown) including the light source unit 140, a light guide plate (not shown) to scatter and make uniform the light emitted from the light source unit 140, and optical sheets (not shown) to adjust characteristics of light exiting from the light guide plate. However, the backlight unit is just an illustrative example, and a component to adjust characteristics of light in transmitting light emitted from the light source unit 140 to the display panel 130 is not limited. Further, equivalent structures as would be understood by those skilled in the art may be substituted therefor, without departing from the scope of the invention.

The controller 150 controls turning on and off of the light source unit 140 based on a result of processing an image signal by the image processor 120. To control turning on and off of the light from the light source unit 140, the controller 150 stores at least one pattern (e.g., preset) corresponding to data (e.g., predetermined) or information and controls the light source unit 140 based on a pattern among stored patterns. The pattern includes 0/1 per unit time or a change pattern of on/off, and thus the controller 150 turns on and off light by switching on/off the light source unit 140 in each unit time based on the pattern.

In the present exemplary embodiment, when an image signal processed by the image processor 120 corresponds to a 3D image, the controller 150 has a pattern corresponding to synchronization information corresponding to a timing of an image frame displayed on the display panel 130. The controller 150 turns on and off the light source unit 140 based on the pattern corresponding to the synchronization information during a non-display period, as described below.

During a display period, a driving signal corresponding to either of a left image frame and a right image frame is applied to the display panel 130 by the image processor 120. Thus, the light source unit 140 generates and emits light during the display period to display the left image frame or the right image frame on the display panel 130.

In a non-display period, an image frame is not displayed on the display panel 130, or image data corresponding to an image frame for a next display period is being output to the display panel 130 so that the image frame is displayed for the next display period. Thus, the light source 140 may not need to continuously generate light in the non-display period as the light source 140 does in the display period.

Accordingly, the controller 150 turns on and off the light source unit 140 based on the pattern corresponding to the synchronization information during the non-display period so as not to interfere with displaying an image frame, thereby transmitting the synchronization information to the shutter glasses 200.

The above pattern may be defined among various types of patterns when the display apparatus 100 is designed; one exemplary type of a pattern is a ratio and a distribution of 0 and 1. However, equivalent structures as would be understood by those skilled in the art may be substituted therefor, without departing from the scope of the invention

An exemplary, non-limiting controller 150 will be further described.

Configuration of the shutter glasses 200 is further described.

The left lens 210 and the right lens 220 selectively perform light transmission or light blocking based on control of the shutter controller 240. When the left lens 210 and the right lens 220 selectively perform light transmission/light blocking with respect to left and right eyes of a user, the user may respectively perceive a left image frame and a right image frame displayed on the display panel 130 through the left eye and the right eye.

The left lens 210 and the right lens 220, may be configured as a liquid crystal lens which blocks light transmission when voltage is applied from the shutter controller 240 and allows light transmission when voltage is not applied. However, the exemplary embodiment is not limited thereto, and the above liquid crystal lens is just an illustrative example; the left lens 210 and the right lens 220 may allow light transmission when voltage is applied and may block light transmission when voltage is not applied. Further, the left lens 210 and the right lens 220 may have different light transmittances based on a level of applied voltage.

The sensing unit 230 detects light emitted from the display apparatus 100, more particularly, light generated by the light source unit 140 and emitted through the display panel 130. The sensing unit 230 to detect light may be configured as a photo sensor or a light receiving element. The sensing unit 230 detects a turning on and off pattern of light from the light source unit 140, and transmits a detection result to the shutter controller 240.

The shutter controller 240 selectively applies voltage to the left lens 210 and the right lens 220, so that selective light transmission is realized. The shutter controller 240 extracts synchronization information from a detection result by the sensing unit 230 and controls operations of the left lens 210 and the right lens 220 corresponding to the synchronization information.

The shutter controller 240 stores the substantially same turning on and off pattern of light set corresponding to synchronization information as the controller 150 of the display apparatus 100. When a turning on and off pattern of light detected by the sensing unit 230 corresponds to the turning on and off pattern (e.g., preset) described above, the shutter controller 240 may extract synchronization information from the pattern. Further, the shutter controller 240 may determine a time in which the turning on and off pattern (e.g., preset) of light is detected as a non-display period.

The shutter controller 240 generates a shutter control signal for light transmission/light blocking of the left lens 210 and the right lens 220 from extraction and the determination results considering a delay due to an extraction process. Further, the shutter controller 240 controls operations of the left lens 210 and the right lens 220 based on the shutter control signal.

To transmit a synchronization signal from the display apparatus 100 to the shutter glasses 200, the display system 1 of the present exemplary embodiment uses the light source unit 140 providing light to the display panel 130 and installs the sensing unit 230 detecting light from the light source unit 140 in the shutter glasses 200, instead of installing a separate communication module in the display apparatus 100 and the shutter glasses 200 to transmit a synchronization signal as in a related art system. Accordingly, the shutter glasses 200 may operate corresponding to a 3D image frame displayed on the display panel 130.

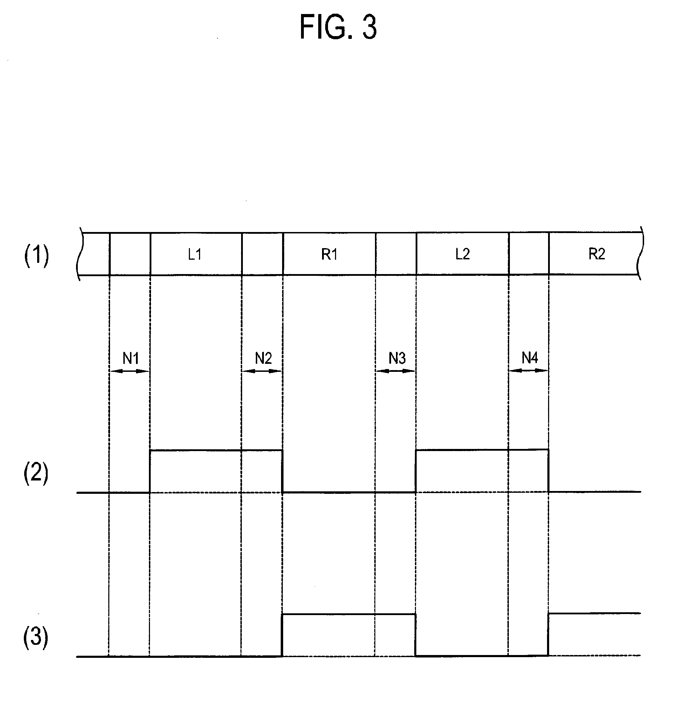

Exemplary processes of controlling the exemplary controller 150 and the exemplary shutter controller 240 are described with reference to FIG. 3.

FIG. 3 illustrates transmission of synchronization information from the display apparatus 100 to the shutter glasses 200, wherein (1) shows a chronological change of a displayed image frame, (2) shows a shutter control signal with respect to the left lens 210, and (3) shows a shutter control signal with respect to the right lens 220.

As shown in (1) of FIG. 3, for a 3D image frame, display periods L1, R1, L2, and R2 and non-display periods N1, N2, N3, and N4 between the display periods L1, R1, L2, and R2 are alternately displayed, the display periods L1, R1, L2, and R2 being periods where a left image frame or a right image frame is displayed and the non-display periods N1, N2, N3, and N4 being periods during which an image frame is not displayed. Further, among the display periods L1, R1, L2, and R2, display periods L1 and L2 indicating a left image frame is displayed, and display periods R1 and R2 indicating a right image frame is displayed, are alternately displayed.

The controller 150 controls the light source unit 140 to generate light during the display periods L1, R1, L2, and R2, thereby displaying an image frame.

The controller 150 turns on and off the light source unit 140 based on a pattern set corresponding to synchronization information during the non-display periods N1, N2, N3, and N4. Here, the pattern may be formed variously, for example but not by way of limitation, a first pattern corresponding to a left image frame and a second pattern corresponding to a right image frame and different from the first pattern.

The controller 150 turns on and off the light source unit 140 based on the first pattern corresponding to the left image frame during a non-display period N1, and turns on and off the light source unit 140 based on the second pattern corresponding to the right image frame during a non-display period N2. In the substantially same manner, the controller 150 turns on and off the light source unit 140 based on the first pattern during a non-display period N3, and turns on and off the light source unit 140 based on the second pattern during a non-display period N4.

When the turning on and off of light is detected by the sensing unit 230, the shutter controller 240 analyzes a light turning on and off pattern. When a light turning on and off pattern for a period (e.g., predetermined) is analyzed to be the first pattern, the shutter controller 240 determines that the period is the non-display periods N1 and N3 and that the next display periods L1 and L2 correspond to the left image frame. Further, when a light turning on and off pattern for a period (e.g., predetermined) is analyzed to be the second pattern, the shutter controller 240 determines that the period is the non-display periods N2 and N4 and that the next display periods R1 and R2 correspond to the right image frame.

Based on a result of the analysis, the shutter controller 240 generates a shutter control signal to control an operation of each of the left lens 210 and the right lens 220, as shown in (2) and (3) of FIG. 3. (2) is a shutter control signal with respect to the left lens 210 and is formed to transmit light during the display periods L1 and L2 corresponding to the left image frame. (3) is a shutter control signal with respect to the right lens 220 and is formed to transmit light during the display periods R1 and R2 corresponding to the right image frame.

The shutter controller 240 controls light transmission/light blocking of the left lens 210 and the right lens 220 based on the shutter control signals.

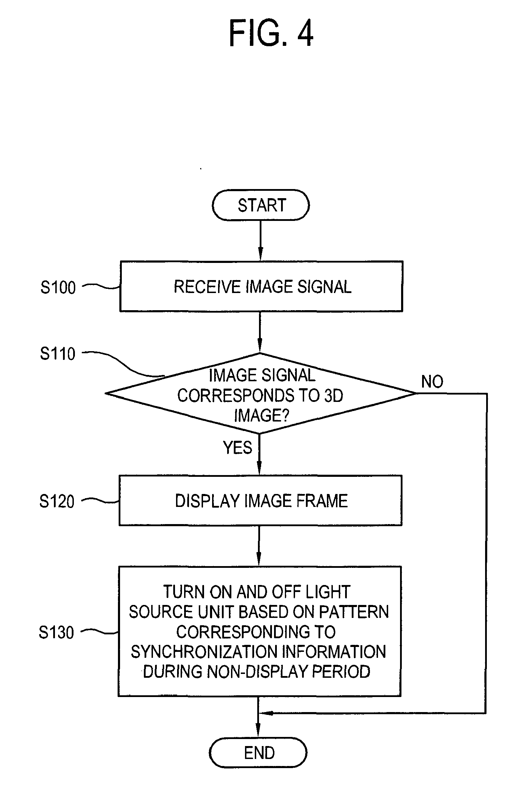

A method of controlling the exemplary display apparatus 100 according to the exemplary embodiment is described with reference to the flowchart illustrated in FIG. 4. When the display apparatus 100 receives an image signal (S100), the controller 150 determines whether the image signal corresponds to a 3D image (S110).

When the image signal is determined to correspond to the 3D image, the image processor 120 processes the image signal to display a 3D image frame on the display panel 130 (S120), and the controller 150 turns on and off the light source unit 140 based on a pattern corresponding to synchronization information (e.g. preset) during a non-display period during which an image frame is not displayed on the display panel 130 (S130).

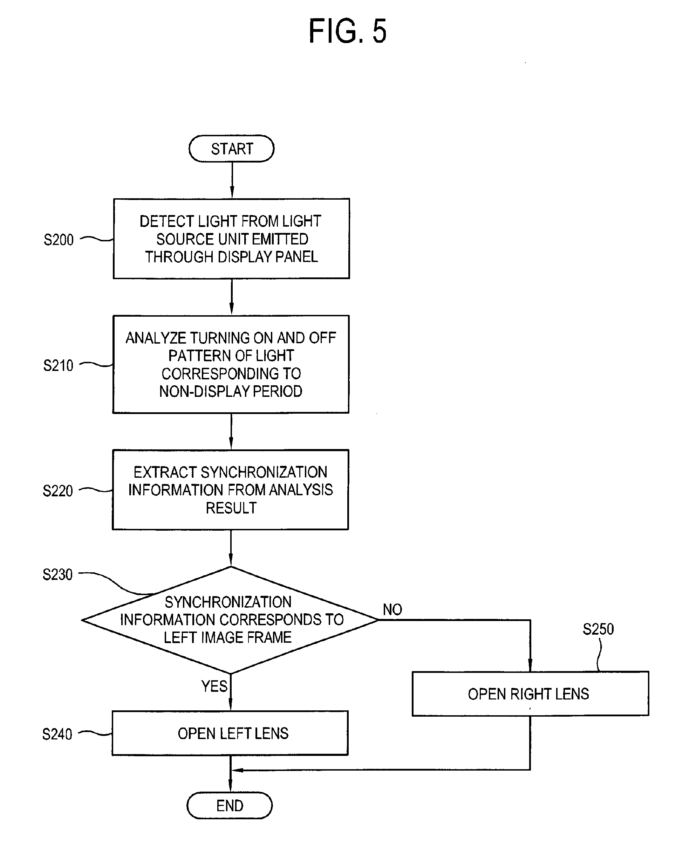

A method of controlling the shutter glasses 200 according to the exemplary embodiment is described with reference to the flowchart illustrated in FIG. 5. The sensing unit 230 detects light from the light source 140 emitted through the display panel 130 (S200).

The shutter controller 240 analyzes a turning on and off pattern of the light corresponding to a non-display period based on a result of the detection by the sensing unit 230 (S210), and extracts synchronization information from a result of the analysis (S220).

The shutter controller 240 determines whether the extracted synchronization information corresponds to a left image frame (S230). When the synchronization information is determined to correspond to the left image frame, the shutter controller 240 controls the left lens 210 to be opened so that the left image frame is perceived by a left eye of a user (S240). When the synchronization information is determined to correspond to a right image frame, the shutter controller 240 controls the right lens 220 to be opened so that the right image frame is perceived by a right eye of a user (S250).

As described above, the light source unit 140 providing light to the display panel 130 can transmit synchronization information for operations of the shutter glasses 200, and an additional component, such as an infrared communication module, may not be installed in the display apparatus 100 to transmit synchronization information. In addition, since the synchronization information is transmitted during a non-display period during which an image frame is not displayed on the display panel 130, the transmission of the synchronization information may be performed without interference with the displaying of an image frame.

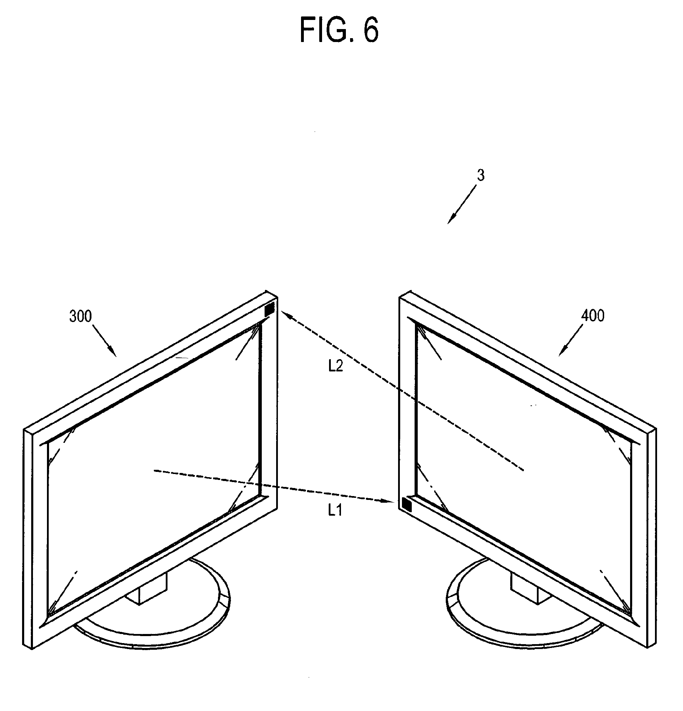

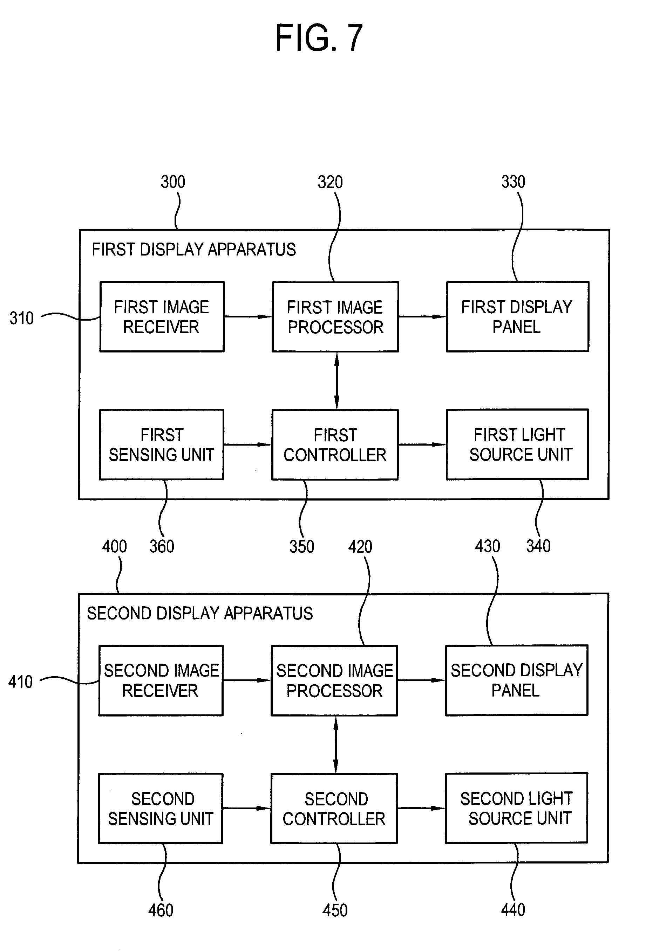

Although the display apparatus 100 transmits synchronization information to the shutter glasses 200 in the first exemplary embodiment, the first exemplary embodiment is just an illustrative example, and various other embodiments may be applied. A second exemplary embodiment is described with reference to FIGS. 6 and 7.

FIG. 6 illustrates an example of a display system 3 according to a second exemplary embodiment. The display system 3 according to the present exemplary embodiment includes a first display apparatus 300 and a second display apparatus 400. As shown in FIG. 7, the first display apparatus 300 includes a first image receiver 310, a first image processor 320, a first display panel 330, and a first light source unit 340. The second display apparatus 400 includes a second image receiver 410, a second image processor 420, a second display panel 430, and a second light source unit 440. The first display apparatus 300 and the second display apparatus 400 have substantially the same configuration as the first exemplary embodiment, and descriptions thereof are omitted.

The first display apparatus 300 includes a first sensing unit 360 to detect light L2 emitted from the second light source unit 440 of the second display apparatus 400, and a first controller 350 to analyze a turning on and off pattern of the light L2 detected by the first sensing unit 360 and to extract information (e.g., predetermined) corresponding to the pattern.

The first controller 350 analyzes whether the turning on and off pattern of the light L2 detected by the first sensing unit 360 is the same as a pattern (e.g., predesignated). The first controller 350 extracts information (e.g. preset) or data corresponding to a result of the analysis and performs an operation corresponding to the extracted information. For example but not by way of limitation, the first controller 350 stores a plurality of patterns and data corresponding to each pattern in a table format or includes an algorithm to extract data corresponding to each pattern.

Although the information or data is synchronization information in the above first exemplary embodiment, the synchronization information is just an illustrative example, and is not limited thereto. The information or data may be any data which the first display apparatus 300 and the second display apparatus 400 refer to.

The second display apparatus 400 includes a second sensing unit 460 to detect light L1 emitted from the first light source unit 340 of the first display apparatus 300, and a second controller 450 to analyze a turning on and off pattern of the light L1 detected by the second sensing unit 460 and to extract information (e.g., predetermined) corresponding to the pattern.

The second controller 450 analyzes whether the turning on and off pattern of the light L1 detected by the second sensing unit 460 is the same as a pattern (e.g., predesignated), and extracts information corresponding to a result of the analysis in the substantially same manner as the first controller 350. A table or an algorithm to extract information from the pattern is applied to the first controller 350 and the second controller 450 in the substantially same manner. Accordingly, the first controller 350 and the second controller 450 respectively control the first light source unit 340 and the second light source unit 440 to transmit data, and receive data through the first sensing unit 360 and the second sensing unit 460.

As described above, the first display apparatus 300 and the second display apparatus 400 turn on and off light based on a pattern set corresponding to information (e.g., predetermined) to transmit and receive the information to and from each other.

In the above exemplary embodiments, an external device communicating with the display apparatus is the shutter glasses 200 or the display apparatuses 300 and 400. However, various types of electronic devices may be applied to the external device. For example, equivalent structures as would be understood by those skilled in the art may be substituted therefor, without departing from the scope of the invention.

The above-described exemplary embodiments (e.g., the methods illustrated in FIGS. 4 and 5) can also be embodied as computer readable codes which are stored on a computer readable recording medium (for example, non-transitory, or transitory) and executed by a computer or processor. The computer readable recording medium is any data storage device that can store data which can be thereafter read by a computer system.

Examples of the computer readable recording medium include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion.

Also, functional programs, codes, and code segments for accomplishing the embodiments can be easily construed by programmers skilled in the art to which the disclosure pertains. A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

Although exemplary embodiments have been shown and described, it will be appreciated by those skilled in the art that changes may be made in these exemplary embodiments without departing from the principles of the inventive concept, the scope of which is defined in the appended claims

## Claims

1. A system comprises a display apparatus and shutter glasses, the display apparatus comprising:
a display panel;
a light source unit which generates light that is provided to the display panel so that an image is displayed; and
a controller which controls turning on and off of the light source unit based on a preset pattern corresponding to first information during a non-display period between images of a video sequence during which an image frame is not displayed on the display panel, so that the shutter glasses configured to detect light from the light source unit extract the first information corresponding to the turning on and off pattern of the light source unit, wherein the first information comprises synchronization information to operate the shutter glasses corresponding to a three-dimensional image displayed on the display panel.

2. The display apparatus of claim 1, wherein the synchronization information comprises a first pattern corresponding to a left image frame and a second pattern corresponding to a right image frame, and the controller alternately selects the first pattern and the second pattern to control the light source unit corresponding to whether the left image frame or the right image frame is displayed.

3. The display apparatus of claim 1 or claim 2, wherein the video sequence comprises successive left and right image frames of 3D video.

4. A method of controlling a system comprising a display apparatus and shutter glasses, the method comprising:
providing light from a light source unit to a display panel and displaying an image frame on the display panel; and
turning on and off the light source unit based on a preset pattern corresponding to first information during a non-display period between images of a video sequence during which the image frame is not displayed on the display panel so that shutter glasses to detect light from the light source unit extract the first information corresponding to the turning on and off pattern of the light source unit, wherein the first information comprises synchronization information to operate the shutter glasses corresponding to a three-dimensional image displayed on the display panel.

5. The method of claim 4, wherein the synchronization information comprises a first pattern corresponding to a left image frame and a second pattern corresponding to a right image frame, and the turning on and off the light source unit comprises alternately selecting the first pattern and the second pattern to control the light source unit corresponding to whether the left image frame or the right image frame is displayed.

6. The method of claim 4 or claim 5, wherein the video sequence comprises successive left and right image frames of 3D video.

## Patentansprüche

1. System, aufweisend eine Anzeigevorrichtung und Blendengläser, wobei die Anzeigevorrichtung aufweist:
ein Anzeigefeld;
eine Lichtquelleneinheit, welche Licht erzeugt, das dem Anzeigefeld bereitgestellt wird, so dass ein Bild angezeigt wird; und
eine Steuerung, welche ein Ein- und Ausschalten der Lichtquelleneinheit anhand eines vorgefertigten Musters entsprechend erster Informationen während einer Nicht-Anzeige-Phase zwischen Bildern einer Videosequenz steuert, während welcher ein Bild-Frame nicht auf dem Anzeigefeld angezeigt wird, so dass die Blendengläser, die zum Erfassen von Licht von der Lichtquelleneinheit gestaltet sind, die ersten Informationen entsprechend dem Ein- und Ausschaltmuster der Lichtquelleneinheit entnehmen, wobei die ersten Informationen Synchronisierungsinformationen aufweisen, um die Blendengläser entsprechend einem dreidimensionalen Bild, das auf dem Anzeigefeld angezeigt wird, zu betreiben.

2. Anzeigevorrichtung nach Anspruch 1, wobei die Synchronisierungsinformationen ein erstes Muster entsprechend einem linken Bild-Frame und ein zweites Muster entsprechend einem rechten Bild-Frame aufweisen und die Steuerung abwechselnd das erste Muster und das zweite Muster auswählt, um die Lichtquelleneinheit abhängig davon zu steuern, ob entweder das linke Bild-Frame oder das rechte Bild-Frame angezeigt wird.

3. Anzeigevorrichtung nach Anspruch 1 oder Anspruch 2, wobei die Videosequenz aufeinanderfolgende linke und rechte Bild-Frames eines 3D-Videos aufweist.

4. Verfahren zum Steuern eines Systems, das eine Anzeigevorrichtung und Blendengläser aufweist, wobei das Verfahren aufweist:
Bereitstellen von Licht von einer Lichtquelleneinheit für ein Anzeigefeld und Anzeigen eines Bild-Frames auf dem Anzeigefeld; und
Ein- und Ausschalten der Lichtquelleneinheit, basierend auf einem vorgefertigten Muster entsprechend erster Informationen während einer Nicht-Anzeige-Phase zwischen Bildern einer Videosequenz, während welcher das Bild-Frame nicht auf dem Anzeigefeld angezeigt wird, so dass die Blendengläser, die Licht von der Lichtquelleneinheit erfassen, die ersten Informationen entsprechend dem Ein- und Ausschaltmuster der Lichtquelleneinheit entnehmen, wobei die ersten Informationen Synchronisierungsinformationen aufweisen, um die Blendengläser entsprechend einem dreidimensionalen Bild, das auf dem Anzeigefeld angezeigt wird, zu betreiben.

5. Verfahren nach Anspruch 4, wobei die Synchronisierungsinformationen ein erstes Muster entsprechend einem linken Bild-Frame und ein zweites Muster entsprechend einem rechten Bild-Frame aufweisen und das Ein- und Ausschalten der Lichtquelleneinheit abwechselndes Auswählen des ersten Musters und des zweiten Musters aufweist, um die Lichtquelleneinheit abhängig davon, ob entweder das linke Bild-Frame oder das rechte Bild-Frame angezeigt wird, zu steuern.

6. Verfahren nach Anspruch 4 oder Anspruch 5, wobei die Videosequenz aufeinanderfolgende linke und rechte Bild-Frames eines 3D-Videos aufweist.

## Revendications

1. Système comprenant un appareil d'affichage et des verres à obturateur, l'appareil d'affichage comprenant :
un panneau d'affichage ;
une unité de source de lumière qui génère de la lumière qui est délivrée au panneau d'affichage de sorte qu'une image soit affichée ; et
un contrôleur qui commande la mise sous tension et hors tension de l'unité de source de lumière sur la base d'un motif prédéfini correspondant à des premières informations pendant une période de non-affichage entre les images d'une séquence vidéo au cours de laquelle une trame d'image n'est pas affichée sur le panneau d'affichage, de sorte que les verres à obturateur configurés pour détecter la lumière provenant de l'unité de source de lumière extraient les premières informations correspondant au motif sous tension et hors tension de l'unité de source de lumière, où les premières informations comprennent des informations de synchronisation pour faire fonctionner les verres à obturateur en correspondance avec une image tridimensionnelle affichée sur le panneau d'affichage.

2. Appareil d'affichage selon la revendication 1, dans lequel les informations de synchronisation comprennent un premier motif correspondant à une trame d'image gauche et un second motif correspondant à une trame d'image droite, et le contrôleur sélectionne alternativement le premier motif et le second motif pour commander l'unité de source de lumière de manière correspondante suivant que la trame d'image gauche ou la trame d'image droite est affichée.

3. Appareil d'affichage selon la revendication 1 ou la revendication 2, dans lequel la séquence vidéo comprend des trames d'images successives gauches et droites d'une vidéo 3D.

4. Procédé de commande d'un système comprenant un appareil d'affichage et des verres à obturateur, le procédé comprenant les étapes suivantes :
délivrer de la lumière depuis une unité de source de lumière vers un panneau d'affichage et afficher une trame d'image sur le panneau d'affichage ; et
mettre sous tension et hors tension l'unité de source de lumière sur la base d'un motif prédéfini correspondant à des premières informations pendant une période de non-affichage entre les images d'une séquence vidéo au cours de laquelle la trame d'image n'est pas affichée sur le panneau d'affichage, de sorte que les verres à obturateur configurés pour détecter la lumière provenant de l'unité de source de lumière extraient les premières informations correspondant au motif sous tension et hors tension de l'unité de source de lumière, où les premières informations comprennent des informations de synchronisation pour faire fonctionner les verres à obturateur en correspondance avec une image tridimensionnelle affichée sur le panneau d'affichage.

5. Procédé selon la revendication 4, dans lequel les informations de synchronisation comprennent un premier motif correspondant à une trame d'image gauche et un second motif correspondant à une trame d'image droite, et la mise sous tension et hors tension de l'unité de source de lumière comprend de sélectionner alternativement le premier motif et le second motif pour commander l'unité de source de lumière de manière correspondante suivant que la trame d'image gauche ou la trame d'image droite est affichée.

6. Procédé selon la revendication 4 ou la revendication 5, dans lequel la séquence vidéo comprend des trames d'images successives gauches et droites d'une vidéo 3D.
